# EUROPÄISCHE PATENTANMELDUNG

(11) **EP 1 033 689 A2**
(43) Veröffentlichungstag der Anmeldung: **06.09.2000**
(21) Anmeldenummer: 00103458.6
(22) Anmeldetag: 29.02.2000
(51) Int. Cl.: G07F 7/10, G06F 1/00

(54) **Berechtigungskontrollsystem für Identifikationskarten**

(30) Priorität: 01.03.1999 DE 19908862
(71) Anmelder: Beta Research GmbH, 85774 Unterföhring (DE)
(72) Erfinder: Mester, Roland, 81827 München (DE)
(74) Vertreter: Heselberger, Johannes

(57) **Zusammenfassung**

Vorrichtung und Verfahren zum Nachweis der Berechtigung eines Nutzers mit Hilfe einer Identifizierungskarte und einer Kartenkontrolleinheit, wobei die Identifizierungskarte eine Eingangs-/Ausgangsschnittstelle zur Kommunikation mit der Kartenkontrolleinheit und mindestens einen Prozessor zur Erstellung einer Antwort auf eine Anfrage der Kartenkontrolleinheit bezüglich der Berechtigung des Nutzers unter Verwendung eines Identifizierungs-Algorithmus aufweist und die Kartenkontrolleinheit eine Eingangs-/Ausgangsschnittstelle zur Kommunikation mit der Identifizierungskarte eine Funktion zur Erstellung einer Anfrage bezüglich der Berechtigung des Nutzers und eine Funktion zur Kontrolle der Antwort der Identifizierungskarte auf diese Anfrage aufweist, wobei die Funktion zur Kontrolle der Antwort der Identifizierungskarte durch die Kartenkontrolleinheit eine Kontrolle des Ergebnisses der Anwendung des Identifizierungs-Algorithmus auf die Anfrage und mindestens einer Prozessor-spezifischen Meßgröße für die Verwendung des Identifizierungs-Algorithmus beinhaltet.

## Beschreibung

Die vorliegende Erfindung betrifft Vorrichtungen und ein Verfahren zur Kontrolle der Berechtigung eines Nutzers bezüglich eines geschützten Systems unter Verwendung von Identifizierungskarten mit Prozessoren, sogenannten Chipkarten.

Der Benutzer eines geschützten Systems soll mit möglichst wenig Aufwand seine Berechtigung dem System mitteilen können. Eine Möglichkeit dafür ist die Verwendung von Chipkarten. Diese schiebt der Benutzer in das dafür vorgesehene Kartenlesegerät und gibt dann, je nach Anwendung, gegebenenfalls noch eine Geheimzahl ein. Das Kartenlesegerät richtet dann eine Berechtigungsanfrage an die Chipkarte welche die Chipkarte beantwortet. Falls die erwartete und die gelieferte Antwort übereinstimmt, wird die Berechtigung des Nutzers bejaht, andernfalls wird sie verneint. Derartige Chipkarten-Berechtigungskontrollsysteme sind bereits bei Geldkarten, Telefonkarten, Versicherungskarten und Mobiltelefonkarten bekannt.

Chipkarten sind allerdings nicht völlig fälschungssicher. Wenn nämlich trotz kryptologischer Sicherheitsverfahren die auf der Chipkarte gespeicherten Daten, sei es durch Verwendung eines Elektronenstrahlmikroskops oder durch Industriespionage bzw. Bestechung von Mitarbeitern der Produzenten dieser Chipkarten, in Erfahrung gebracht werden, kann eine Chipkarten-Kopie erstellt werden, mit deren Hilfe die durch die Original-Chipkarte belegte Berechtigung vorgetäuscht werden kann. Dies ist umso einfacher als die heute üblicherweise benutzten Chipkarten in ihren wesentlichen Merkmalen, vor allem den Prozessorfunktionen, einander ähnlich sind. Die Erstellung einer Chipkarten-Kopie erfordert somit nur eine einmalige Softwareentwicklung und eine einmalige Erstellung der Programm-Maske des Chips. Es ist also mit relativ geringem Aufwand möglich die von der Original-Chipkarte vermittelte Zugangsberechtigung in Massenproduktion zu kopieren.

Eine weitere Möglichkeit um eine Berechtigung vorzutäuschen sind Zusatzkarten für Personal Computer. Diese werden mit einem Flachbandkabel und einem Adapter in den Chipkartenschlitz des Kartenlesegeräts gesteckt und stellen so eine Verbindung zwischen dem Kartenlesegerät und dem Personal Computer her. Mit Hilfe des PCs können dann die Funktionen der Chipkarte simuliert werden. Diese Konstruktion erlaubt auch die einfache Umstellung auf Software-Updates für die Berechtigungskontrolle. Diese Art der Umgehung der Berechtigungskontrolle ist besonders im Home-Bereich leicht und kostengünstig zu verwirklichen.

Die Verwendung von Benutzer-individuellen Geheimnummern erschwert zwar die Fälschung von Chipkarten und behindert deren Simulation mit Hilfe eines PCs. Bei der Verwendung von Pay-TV-Empfängern und anderen Anwendungen, bei denen die Berechtigungskarte unter den Nutzern frei übertragbar sein soll, kann aber auch eine Karte mit Geheimnummer beliebig vervielfältigt werden.

Die Aufgabe der Erfindung ist deshalb die Bereitstellung von Vorrichtungen und einem Verfahren zur Berechtigungskontrolle mit Identifikationskarten, wobei die Vervielfältigung der Karte und die Täuschung des Kontrollsystems erschwert werden soll.

Die Lösung dieser Aufgabe besteht in den Vorrichtungen und in dem Verfahren wie sie in den unabhängigen Ansprüchen beschrieben sind. Erfindungsgemäß wird eine Identifizierungsvorrichtung zum Nachweis der Berechtigung eines Nutzers mit einer Identifizierungskarte und einer Kartenkontrolleinheit bereitgestellt, wobei die Identifizierungskarte eine Eingangs-/Ausgangsschnittstelle zur Kommunikation mit der Kartenkontrolleinheit und mindestens einen Prozessor zur Erstellung einer Antwort auf eine Anfrage der Kartenkontrolleinheit bezüglich der Berechtigung des Nutzers unter Verwendung eines Identifizierungs-Algorithmus aufweist und die Kartenkontrolleinheit eine Eingangs-/Ausgangsschnittstelle zur Kommunikation mit der Identifizierungskarte, eine Funktion zur Erstellung einer Anfrage bezüglich der Berechtigung des Nutzers unter Verwendung des Identifizierungs-Algorithmus und eine Funktion zur Kontrolle der Antwort der Identifizierungskarte auf diese Anfrage aufweist, wobei die Funktion zur Kontrolle der Antwort der Identifizierungskarte durch die Kartenkontrolleinheit eine Kontrolle des Ergebnisses der Anwendung des Identifizierungs-Algorithmus auf die Anfrage und mindestens einer Prozessor-spezifischen Meßgröße für die Verwendung des Identifizierungs-Algorithmus beinhaltet.

Im Gegensatz zu anderen Chipkartensystemen werden bei der erfindungsgemäßen Identifizierungsvorrichtung nicht nur Informationen bezüglich der auf der Karte vorhandenen Informationen abgefragt, sondern auch eine Meßgröße, die für den Prozessor der Chipkarte bei der Durchführung des Identifizierungs-Algorithmus kennzeichnend ist. Das Ist-Maß dieser Prozessor-spezifischen Meßgröße wird ermittelt und mit einem Soll-Maß dieser Meßgröße verglichen. Diese Kontrollfunktion kann anstelle oder parallel zu anderen Sicherheitsmechanismen durchgeführt werden.

Vorzugsweise ist die Prozessor-spezifische Meßgröße ein Maß der für die Anwendung des Identifizierungs-Algorithmus in der Identifizierungskarte benötigte Zeitdauer. Abhängig vom Prozessor benötigen die meisten Prozessoren für die Beantwortung von speziellen Anfragen unterschiedlich lange Zeit. Anhand dieser Zeit läßt sich bestimmen, ob der Original-Prozessor der Original-Karte die Antwort erstellt hat oder ob der Identifizierungs-Algorithmus von einer Kopie angewendet wurde. Vorzugsweise wird dabei ein Identifizierungs-Algorithmus verwendet, bei dem sich die Bearbeitungszeiten durch gängige Prozessoren von dem Prozessor der Original-Karte am deutlichsten unterscheiden. Diese Bearbeitungszeit kann aus einer Messung der Gesamt-Antwortzeit, das ist die Zeit zwischen dem Aussenden einer Anfrage durch die Kartenkontrolleinheit und dem Eingang der Antwort der Karte bei der Kontrolleinheit, unter Berücksichtigung der Übertragungszeit der Anfrage und der Antwort, ermittelt werden. Beispielsweise ist aber als Prozessor-spezifische Meßgröße auch der von der Identifizierungskarte aufgenommene Strom für die Anwendung des Identifizierungs-Algorithmus denkbar.

Vorzugsweise ist bei der Identifizierungsvorrichtung der Prozessor zur Erstellung der Antwort speziell auf die Ausführung des Identifizierungs-Algorithmus ausgelegt. Diese Prozessor-spezifische Meßgröße ist besonders charakteristisch, wenn der Prozessor speziell für die Ausführung des Identifizierungs-Algorithmus ausgelegt ist. Dadurch kann der Prozessor die Anfrage, die mit Hilfe des speziellen Identifizierungs-Algorithmus zu beantworten ist, beispielsweise besonders schnell beantworten und unterscheidet sich darin von anderen Prozessoren, bei denen etwa die Berechnung in Software emuliert wird oder die nicht über die Original-Hardware verfügen.

Vorzugsweise ist bei der Identifizierungsvorrichtung der Prozessor zur Erstellung der Antwort speziell auf die Berechnung von Reed-Solomon Codes über pseudo-zufällige Sequenzen ausgelegt. Pseudo-zufällig Sequenzen sind lange Zahlen, die durch Anwendung eines feststehenden Algorithmus auf wenige Zufallszahlen generiert werden. Gerade bei diesen sehr rechenintensiven Algorithmen zeigt sich besonders deutlich, ob der Prozessor speziell für diese Aufgabe ausgelegt ist, oder ob die Berechnung nur in Software emuliert wurde. Die Unterschiede sind in diesem Fall so groß, daß selbst ein schneller Personal Computer, der über eine Zusatzkarte mit der Kartenkontrolleinheit verbunden ist, wesentlich mehr Zeit für die Beantwortung der Anfrage benötigt, als ein spezieller Prozessor.

Denkbar sind hier auch andere rechenzeitintensive Algorithmen wie zum Beispiel DES (Data Encryption Standard) oder RSA (Rivest-Shamir-Adleman). Dabei ist es auch möglich den Prozessor auf mehrere Verfahren auszulegen und dann für die Authentifizierung entweder einen einzigen Algorithmus auszuwählen, oder unter Verwendung mehrerer Algorithmen die Authentifizierung durchzuführen. Der Unterschied zwischen einem Original-Prozessor und einer Kopie kann auch durch mehrfaches Wiederholen des Algorithmus noch deutlicher gemacht werden.

Die vorliegende Erfindung bezieht sich auch auf eine Identifizierungskarte zum Nachweis der Berechtigung eines Nutzers im Zusammenwirken mit einer Kartenkontrolleinheit unter Verwendung eines Identifizierungs-Algorithmus, wobei die Identifizierungskarte eine Eingangs-/Ausgangsschnittstelle zur Kommunikation mit der Kartenkontrolleinheit und mindestens einen Prozessor zur Erstellung einer Antwort auf eine Anfrage der Kartenkontrolleinheit bezüglich der Berechtigung des Nutzers unter Verwendung eines Identifizierungs-Algorithmus aufweist, wobei die Identifizierungskarte einen Prozessor aufweist der speziell auf die Ausführung des Identifizierungs-Algorithmus ausgelegt ist.

Vorzugsweise ist bei der Identifizierungskarte der Prozessor der Identifizierungskarte zur Erstellung der Antwort speziell auf die Berechnung von Reed-Solomon Codes über pseudo-zufälligen Sequenzen ausgelegt.

Des weiteren umfaßt die vorliegende Erfindung auch die Vorrichtung der Kartenkontrolleinheit zum Nachweis der Berechtigung eines Nutzers im Zusammenwirken mit einer Identifizierungskarte, wobei die Kartenkontrolleinheit eine Eingangs-/Ausgangsschnittstelle zur Kommunikation mit der Identifizierungskarte, eine Funktion zur Erstellung einer Anfrage bezüglich der Berechtigung des Nutzers und eine Funktion zur Kontrolle der Antwort der Identifizierungskarte auf die Anfrage aufweist, wobei die Funktion zur Kontrolle der Antwort der Identifizierungskarte durch die Kartenkontrolleinheit eine Kontrolle des Ergebnisses der Anwendung des Identifizierungs-Algorithmus auf die Anfrage und mindestens einer Prozessor-spezifischen Meßgröße für die Verwendung des Identifizierungs-Algorithmus beinhaltet.

Vorzugsweise ist bei der Kartenkontrolleinheit die Prozessor-spezifische Meßgröße ein Maß der für die Anwendung des Identifizierungs-Algorithmus in der Identifizierungskarte benötigten Zeitdauer. Andere in Betracht kommende Meßgrößen sind die Stromaufnahme oder Wärmeabgabe.

Die vorliegende Erfindung bezieht sich auch auf ein Verfahren zum Nachweis der Berechtigung eines Nutzers das mindestens folgende Schritte aufweist:
Erstellung einer Anfrage bezüglich der Berechtigung des Nutzers durch eine Kartenkontrolleinheit an eine Identifizierungskarte,
Erstellung einer Antwort in einem Prozessor der Identifizierungskarte auf die Anfrage der Kartenkontrolleinheit unter Verwendung eines Identifizierungs-Algorithmus, und
Kontrolle der Antwort der Identifizierungskarte auf die Anfrage der Kartenkontrolleinheit durch die Kartenkontrolleinheit, wobei die Kontrolle der Antwort der Identifizierungskarte durch die Kartenkontrolleinheit eine Kontrolle des Ergebnisses der Anwendung des Identifizierungs-Algorithmus auf die Anfrage und mindestens einer Prozessor-spezifischen Meßgröße für die Verwendung des Identifizierungs-Algorithmus in dem Prozessor zur Erstellung einer Antwort beinhaltet.

Vorzugsweise ist bei dem Verfahren die Prozessor-spezifische Meßgröße ein Maß der für die Anwendung des Identifizierungs-Algorithmus in der Identifizierungskarte benötigten Zeitdauer.

Vorzugsweise ist bei dem Verfahren der Prozessor zur Erstellung der Antwort in der Identifizierungskarte speziell auf die Ausführung des Identifizierungs-Algorithmus ausgelegt.

Vorzugsweise ist bei dem Verfahren der Prozessor der Identifizierungskarte zur Erstellung der Antwort speziell für die Berechnung von Reed-Solomon Codes über pseudo-zufälligen Sequenzen ausgelegt.

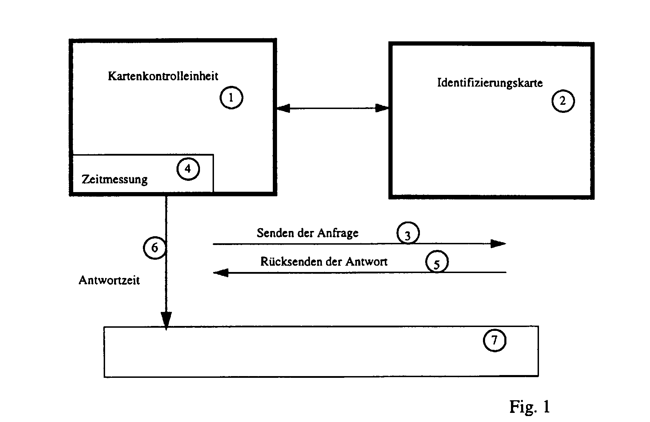

Die vorliegende Erfindung wird beispielhaft in der Figur 1 dargestellt. Figur 1 zeigt als Funktionsschema die Funktionen der Kartenkontrolleinheit und der Identifizierungskarte.

Zunächst erstellt die Kartenkontrolleinheit 1 eine Anfrage, die beispielsweise einen Umfang von 4 Byte haben kann, und sendet (siehe Pfeil 3) diese an die Identifizierungskarte 2. Gleichzeitig mit der Übermittlung der Anfrage startet die Kartenkontrolleinheit 1 die Zeitmessung 4 und die Berechnung der Antwort auf die Anfrage. Dabei wird aus den 4 Byte Daten der Anfrage eine pseudo-zufällige Sequenz generiert und über diese dann ein Reed-Solomon Code berechnet. Die Identifizierungskarte 2 beginnt auch mit der Berechnung der Antwort auf die Anfrage und sendet (siehe Pfeil 5) diese anschließend an die Kartenkontrolleinheit 1 zurück. Dieser Vorgang dauert bei der Verwendung eines extra für die Berechnung von pseudo-zufälligen Sequenzen und von Reed-Solomon Codes ausgelegten Prozessors ca. 10 ms. Die Kartenkontrolleinheit 1 stoppt nach Erhalt der Antwort die Zeitmessung 4 und übermittelt (siehe Pfeil 6) die gemessene Zeit an eine Entscheidungsfunktion 7. Nach Abschluß der Berechnung der Antwort in der Kartenkontrolleinheit 1 wird außerdem die Antwort der Kartenkontrolleinheit 1 und die Antwort der Identifizierungskarte 2 an die Entscheidungsfunktion 7 übermittelt (siehe wiederum Pfeil 6). Hier werden die beiden Antworten und die gemessene Berechnungsdauer der Identifizierungskarte 2 mit einer Referenzzeit verglichen. Auf der Grundlage dieser beiden Vergleiche wird dann entschieden, ob die Identifizierungskarte tatsächlich berechtigt ist, das heißt ob eine Original-Karte oder eine gefälschte oder emulierte Karte verwendet wurde.

Die vorliegende Erfindung erlaubt somit die Verwendung einer Chipkarte zur Berechtigungskontrolle mit erhöhter Sicherheit gegen Fälschung und Emulation. Dieser Sicherheitsgewinn wird durch einfach und kostengünstig zu implementierende Maßnahmen erreicht. Dadurch wird insbesondere die Absicherung von Pay-TV-Berechtigungen gegen Piraterie deutlich verbessert.

## Patentansprüche

1. Identifizierungsvorrichtung zum Nachweis der Berechtigung eines Nutzers mit einer Identifizierungskarte und einer Kartenkontrolleinheit, wobei
die Identifizierungskarte eine Eingangs-/Ausgangsschnittstelle zur Kommunikation mit der Kartenkontrolleinheit und mindestens einen Prozessor zur Erstellung einer Antwort auf eine Anfrage der Kartenkontrolleinheit bezüglich der Berechtigung des Nutzers unter Verwendung eines Identifizierungs-Algorithmus aufweist und
die Kartenkontrolleinheit eine Eingangs-/Ausgangsschnittstelle zur Kommunikation mit der Identifizierungskarte, eine Funktion zur Erstellung einer Anfrage bezüglich der Berechtigung des Nutzers und eine Funktion zur Kontrolle der Antwort der Identifizierungskarte auf diese Anfrage aufweist,
**dadurch gekennzeichnet, daß**
die Funktion zur Kontrolle der Antwort der Identifizierungskarte durch die Kartenkontrolleinheit eine Kontrolle des Ergebnisses der Anwendung des Identifizierungs-Algorithmus auf die Anfrage und mindestens einer Prozessorspezifischen Meßgröße für die Verwendung des Identifizierungs-Algorithmus beinhaltet.

2. Identifizierungsvorrichtung nach Anspruch 1, dadurch gekennzeichnet, daß die Prozessor-spezifische Meßgröße ein Maß der für die Anwendung des Identifizierungs-Algorithmus in der Identifizierungskarte benötigten Zeitdauer ist.

3. Identifizierungsvorrichtung nach einem der vorhergehenden Ansprüche, dadurch gekennzeichnet, daß der Prozessor der Identifizierungskarte zur Erstellung der Antwort speziell auf die Ausführung des Identifizierungs-Algorithmus ausgelegt ist.

4. Identifizierungsvorrichtung nach einem der vorhergehenden Ansprüche, dadurch gekennzeichnet, daß der Prozessor der Identifizierungskarte zur Erstellung der Antwort speziell auf die Berechnung von Reed-Solomon Codes über pseudo-zufälligen Sequenzen ausgelegt ist.

5. Identifizierungskarte zum Nachweis der Berechtigung eines Nutzers im Zusammenwirken mit einer Kartenkontrolleinheit unter Verwendung eines Identifizierungs-Algorithmus, wobei
die Identifizierungskarte eine Eingangs-/Ausgangsschnittstelle zur Kommunikation mit der Kartenkontrolleinheit und mindestens einen Prozessor zur Erstellung einer Antwort auf eine Anfrage der Kartenkontrolleinheit bezüglich der Berechtigung des Nutzers unter Verwendung eines Identifizierungs-Algorithmus aufweist,
**dadurch gekennzeichnet, daß**
die Identifizierungskarte einen Prozessor aufweist der speziell auf die Ausführung des Identifizierungs-Algorithmus ausgelegt ist, was eine Kontrolle des Ergebnisses der Anwendung des Identifizierungs-Algorithmus auf die Anfrage und mindestens einer Prozessor-spezifischen Meßgröße für die Verwendung des Identifizierungs-Algorithmus durch eine Funktion zur Kontrolle der Antwort der Identifizierungskarte der Kartenkontrolleinheit ermöglicht.

6. Identifizierungskarte nach Anspruch 5, dadurch gekennzeichnet, daß der Prozessor der Identifizierungskarte zur Erstellung der Antwort speziell auf die Berechnung von Reed-Solomon Codes über pseudo-zufälligen Sequenzen ausgelegt ist.

7. Kartenkontrolleinheit zum Nachweis der Berechtigung eines Nutzers im Zusammenwirken mit einer Identifizierungskarte, wobei
die Kartenkontrolleinheit eine Eingangs-/Ausgangsschnittstelle zur Kommunikation mit der Identifizierungskarte, eine Funktion zur Erstellung einer Anfrage bezüglich der Berechtigung des Nutzers und eine Funktion zur Kontrolle der Antwort der Identifizierungskarte auf die Anfrage aufweist, wobei die Antwort auf die Anfrage von mindestens einem Prozessor der Identifizierungskarte unter Verwendung eines Identifizierungs-Algorithmus erstellt wurde,
**dadurch gekennzeichnet, daß**
die Funktion zur Kontrolle der Antwort der Identifizierungskarte durch die Kartenkontrolleinheit eine Kontrolle des Ergebnisses der Anwendung des Identifizierungs-Algorithmus auf die Anfrage und mindestens einer Prozessorspezifischen Meßgröße für die Verwendung des Identifizierungs-Algorithmus beinhaltet.

8. Kartenkontrolleinheit nach Anspruch 7, dadurch gekennzeichnet, daß die Prozessor-spezifische Meßgröße ein Maß der für die Anwendung des Identifizierungs-Algorithmus in der Identifizierungskarte benötigten Zeitdauer ist.

9. Verfahren zum Nachweis der Berechtigung eines Nutzers das mindestens folgende Schritte aufweist:
Erstellung einer Anfrage bezüglich der Berechtigung des Nutzers durch eine Kartenkontrolleinheit an eine Identifizierungskarte,
Erstellung einer Antwort in einem Prozessor der Identifizierungskarte auf die Anfrage der Kartenkontrolleinheit unter Verwendung eines Identifizierungs-Algorithmus, und
Kontrolle der Antwort der Identifizierungskarte auf die Anfrage der Kartenkontrolleinheit durch die Kartenkontrolleinheit,
**dadurch gekennzeichnet, daß**
die Kontrolle der Antwort der Identifizierungskarte durch die Kartenkontrolleinheit eine Kontrolle des Ergebnisses der Anwendung des Identifizierungs-Algorithmus auf die Anfrage und mindestens einer Prozessor-spezifischen Meßgröße für die Verwendung des Identifizierungs-Algorithmus in dem Prozessor zur Erstellung einer Antwort beinhaltet.

10. Verfahren nach Anspruch 9, dadurch gekennzeichnet, daß die Prozessorspezifische Meßgröße ein Maß der für die Anwendung des Identifizierungs-Algorithmus in der Identifizierungskarte benötigten Zeitdauer ist.

11. Verfahren nach einem der Ansprüche 9 oder 10, dadurch gekennzeichnet, daß der Prozessor zur Erstellung der Antwort in der Identifizierungskarte speziell auf die Ausführung des Identifizierungs-Algorithmus ausgelegt ist.

12. Verfahren nach Anspruch 11, dadurch gekennzeichnet, daß der Prozessor der Identifizierungskarte zur Erstellung der Antwort speziell für die Berechnung von Reed-Solomon Codes über pseudo-zufälligen Sequenzen ausgelegt ist.
